# EUROPÄISCHE PATENTSCHRIFT

(11) **EP 3 444 150 B1**
(45) Veröffentlichungstag und Bekanntmachung des Hinweises auf die Patenterteilung: **04.11.2020**
(21) Anmeldenummer: 18177089.2
(22) Anmeldetag: 11.06.2018
(51) Int. Cl.: B60R 25/10, B60R 25/20

(54) **SICHERUNG EINER FUNKKOMMUNIKATION FÜR FAHRZEUG-ZUGANGSSYSTEME**
SECURING A RADIO COMMUNICATION FOR VEHICLE ACCESS SYSTEMS
SÉCURISATION D'UNE COMMUNICATION RADIO POUR SYSTÈMES D'ACCÈS AU VÉHICULE

(30) Priorität: 17.08.2017 DE 102017118830
(43) Veröffentlichungstag der Anmeldung: 20.02.2019
(73) Patentinhaber: Huf Hülsbeck & Fürst GmbH & Co. KG, 42551 Velbert (DE)
(72) Erfinder: SIMON, Jörg, 42489 Wülfrath (DE); OBERBECKMANN, Kai Magnus, 42105 Wuppertal (DE)
(74) Vertreter: Zenz Patentanwälte Partnerschaft mbB

(56) Entgegenhaltungen:
- US-A1- 2014 169 564

## Beschreibung

Die Erfindung betrifft ein Verfahren zur Absicherung von Funkverbindungen bei Zugangssystemen für Fahrzeuge.

Es ist bekannt, Benutzern von Fahrzeugen einen Zugang zum Fahrzeug ohne aktive Schlüsselverwendung zu ermöglichen. Dazu stehen sogenannte Keyless-Entry- und Keyless-Go-Systeme zur Verfügung. In solch vorbereiteten Fahrzeugen ist ein Funksystem integriert, dass mit einem sogenannten ID-Geber kommunizieren kann, den ein berechtigter Benutzer bei sich trägt. Ein solcher ID-Geber kann grundsätzlich ein Funkschlüssel sein, in jüngerer Zeit werden jedoch auch zunehmend mobile Kommunikationssysteme, insbesondere Smartphones für den Zugang verwendet. Derartige mobile Kommunikationssysteme bringen standardmäßig Kommunikationsfähigkeiten mit sich, die nicht proprietär wie bei einem Funkschlüssel sind, sondern regelmäßig einem allgemein zugänglichen Standard unterliegen.

Insbesondere können solche Zugangssysteme auf Funkkommunikationsstandards mit kurzer Reichweite zurückgreifen, wie beispielsweise den Bluetooth-Standard.

Derart standardisierte Kommunikationsprotokolle nutzen häufig Frequenzspreizverfahren für die drahtlose Datenübertragung, beispielsweise das Verfahren Frequency Hopping Spread Spectrum (FHSS). Bei diesem Verfahren wechselt die Trägerfrequenz (der Kanal) einer drahtlosen Datenübertragung über die Zeit in diskreten Sprüngen. Sowohl die Folge der Frequenzwechsel als auch die Verweildauer auf einer Frequenz kann dabei variiert werden. Solche Verfahren sind grundsätzlich hinsichtlich Störanfälligkeit und auch Abhörsicherheit günstiger als Verfahren ohne Frequenzspreizung.

Bei Fahrzeugen und funkbasierten Zugangssystemen besteht grundsätzlich die Gefahr, dass Funkkommunikationen abgehört oder verlängert werden. Auf diese Weise sind sogenannte Relay-Station-Attacken möglich, bei denen eine Funkstrecke zwischen einem Fahrzeug und einem autorisierenden ID-Geber verlängert werden. Damit ist selbst dann Zugriff auf ein Fahrzeug möglich, wenn sich der zugehörige ID-Geber eigentlich außerhalb der Reichweite des Fahrzeuges befindet, weil eine dazwischen befindliche Funkstrecke von einem Angreifer mit mehreren Funkstationen verlängert wird.

Bei der Nutzung des Bluetooth-Protokolls oder einem anderen Protokoll unter Verwendung von Frequenzspreizverfahren ist eine Verbindung zwischen einem ID-Geber (beispielsweise einem Smartphone mit einer Applikation zum Zugang zum Fahrzeug) und einer Steuereinrichtung im Fahrzeug aufgrund der Frequenzwechsel zwar schwieriger, grundsätzlich ist jedoch auch dort ein Mithören möglich. Der Angreifer kann eine Frequenzwechsel-Information aus der Kommunikation zwischen der Steuereinrichtung im Fahrzeug und dem ID-Geber abhören. Ist dies erfolgreich gelungen, kann selbst bei einer solchen Funkverbindung eine sogenannte Relay-Station-Attacken ausgeführt werden.

Das Dokument EP 1747955 B1 offenbart ein Verfahren, bei dem eine Kommunikation zwischen einem Funkschlüssel und einem Fahrzeug gesichert wird, indem ein Frequenzmuster in Abhängigkeit von einer Zufallszahl erstellt wird und eine Kommunikation auf Grundlage dieses Frequenzmusters durchgeführt wird. Außerdem wird fahrzeugseitig geprüft, ob von dem vereinbarten Frequenzmuster abweichende weitere Trägerfrequenzen in der Umgebung des Fahrzeuges abgestrahlt werden, wobei dann, wenn dies festgestellt wird, die Kommunikation oder Legitimation abgebrochen wird.

Aufgabe der Erfindung ist es, ein verbessertes Verfahren zur Absicherung von Kommunikationen zwischen einem Fahrzeug und dessen Steuereinrichtung und einem mobilen ID-Geber, insbesondere einem mobilen Kommunikationsgerät bereitzustellen.

Diese Aufgabe wird durch ein Verfahren mit den Merkmalen des Patentanspruches 1 gelöst.

Gemäß der Erfindung wird sichergestellt, dass ein Angreifer nicht in der Lage ist, die Funkkommunikation zwischen ID-Geber und fahrzeugseitiger Steuereinrichtung zu verfolgen.

Erfindungsgemäß wird zunächst eine Kommunikationsverbindung zwischen einem ID-Geber und der Steuereinrichtung im Fahrzeug aufgebaut. Dazu werden die Verbindungsparameter gemäß einem proprietären Protokoll oder einem Standardprotokoll etabliert. Im Falle einer Bluetooth-Verbindung geschieht dies beispielsweise so, dass eine der beteiligten Einheiten, beispielsweise der ID-Geber, einen Pairing-Request an die fahrzeugseitige Steuereinrichtung sendet, welche mit einer Pairing-Response antwortet. Anschließend wird ein Schlüssel zwischen den Einrichtungen gemäß einem etablierten Verbindungsverfahren ausgetauscht. Dann erfolgen eine gegenseitige Authentifizierung und die Generierung eines geheimen Schlüssels. Anschließend ist eine verschlüsselte Bluetooth-Verbindung etabliert.

Dazu wird bei einer Bluetooth-Low-Energy-Verbindung beispielsweise ein sogenannter Long-Term-Key erstellt und ausgetauscht, welcher in beiden Geräten gespeichert wird und zur Ableitung eines neuen Schlüssels bei jeder erneuten Aufnahme einer verschlüsselten Verbindung verwendet wird.

Gemäß der Erfindung wird dann, wenn die gesicherte und verschlüsselte Datenverbindung auf der unterliegenden Kommunikationsverbindung aufgebaut ist, zwischen den verbundenen Geräten ein Austausch geänderter Verbindungsparameter vorgenommen. Die verschlüsselte Datenverbindung wird entsprechend genutzt, um geänderte Verbindungsparameter, insbesondere Parameter der Frequenzspreizung auszutauschen. Im Falle des Bluetooth-Standards bedeutet dies, sobald eine verschlüsselte Datenverbindung etabliert ist, wird die Sequenz der Frequenzwechsel und ggf. die Kanal-Verweildauer verändert. Auf den Inhalt der verschlüsselten Verbindung hat ein Angreifer keinen Zugriff. Entsprechend kann die Relay-Station-Attacke den nun geänderten Frequenzwechseln und Sprungdauern nicht folgen. Der Angreifer ist nicht in der Lage, die Funkstrecke zu verlängern oder zu manipulieren. Dabei werden die Verbindungsparameter nicht nach einem standardisierten Algorithmus geändert, z.B. gemäß dem Bluetooth-Standard, sondern die Frequenzwechsel oder/und Verweildauern können gemäß einem abweichenden Algorithmus oder Vorgaben geändert werden, die durch die ausgetauschten Verbindungsparameter spezifiziert werden. Daher liegt der Vorteil der Erfindung darin, den Aufbau der Erfindung gemäß einem standardisierten Protokollvorzunehmen, während dann eine proprietäre Aushandlung der Verbindungsparameter und der physikalischen Eigenschaften des Frequenzspreizverfahrens über die verschlüsselt ausgetauschten Verbindungsparameter erfolgt.

Entsprechend nutzt die Erfindung den Ansatz, die Verbindungsparameter eine Kommunikationsverbindung nach Etablierung einer verschlüsselten Datenverbindung, von ersten Verbindungsparametern hin zu zweiten Verbindungsparametern zu ändern, wobei diese zweiten Verbindungsparameter erst nach Erstellung der verschlüsselten Datenverbindung ausgetauscht werden.

Dabei gilt, dass die Verbindungsparameter bei jeder neuen Verbindung erneut ausgetauscht werden können, sobald die Verbindung verschlüsselt und damit abhörsicher ist. Als Verbindungsparameter kommt dabei insbesondere die Frequenzsprungtabelle, die Hopp-Dauer (Sprungdauer), RSSI-Pegel oder auch die Ausgangsleistung in Frage und auch deren Änderung in vorgegebenen Mustern oder Zeitintervallen.

Bei der Nutzung des Bluetooth-Protokolls ergibt sich dabei insbesondere der Vorteil, dass zunächst für einen Verbindungsaufbau ein energiesparender Advertising-Betriebsmodus aktiviert werden kann und erst bei sicherheitsrelevanten Situationen, beispielsweise dem Zugriff auf das Fahrzeug oder den Motorstart, in den für einen Energieverbrauch ungünstigeren verschlüsselten Connected-Mode übergegangen werden kann, in welchem dann Verbindungsparameter geändert und ausgetauscht werden.

In einer vorteilhaften Ausführungsform der Erfindung enthalten die Verbindungsparameter eine Frequenzabfolge von Trägerfrequenzen.

Es ist in Verfahren zur Frequenzspreizung, insbesondere beim sogenannten Frequency Hopping Spread Spectrum (FHSS)-Verfahren bekannt, eine Kommunikationsverbindung mit zeitlich wechselnden Kanälen zu nutzen. Die auf der Kommunikationsverbindung ausgeführte Datenverbindung wird also kontinuierlich gehalten, die unterliegende Kommunikationsverbindung wechselt jedoch in synchronisierter Weise zwischen Sender und Empfänger über verschiedene Kanäle. Dieses Verfahren wird beispielsweise beim Bluetooth-Standard verwendet. Eine Nutzung dieser Frequenzwechsel erfolgt jedoch üblicherweise erst im sogenannten Connected-Mode des Bluetooth-Verfahrens. Das bei Bluetooth verwendete Frequenzspreizungsverfahren verwendet 79 Kanäle die innerhalb des 2,4 GHz-Bandes liegen, wobei jeder der Kanäle 1 MHz breit ist. Ein Generator für Pseudozufallszahlen erzeugt eine Folge von Frequenzen auf die gewechselt wird. Verwenden dabei Sender und Empfänger den gleichen Startparameter und sind dabei zeitlich synchronisiert, wechseln Sender und Empfänger gleichzeitig auf die passenden Frequenzen, wobei jede Frequenz bzw. jeder Kanal nur für eine gewisse Zeitspanne aktiv ist. Als Verbindungsparameter kann in einem solchen Fall der Startparameter verwandt werden oder ein Parameter, welcher die Abfolge von Frequenzen oder Kanälen spezifiziert. Auch die Verweildauer auf einem Kanal oder einer Frequenz kann in den Verbindungsparametern hinterlegt sein. Wesentlich ist, dass einerseits die Verbindungsparameter gemäß einem standardisierten Verfahren ausgetauscht werden, nach Herstellung einer Kommunikationsverbindung und darauf etablierten Datenkommunikation, welche verschlüsselt ist, werden jedoch neue Verbindungsparameter gemäß der Erfindung ermittelt und ausgetauscht. Dann wird die der Datenkommunikation unterliegende Kommunikationsverbindung gemäß diesen neuen Verbindungsparametern umgestellt. Danach wird die Kommunikationsverbindung gemäß den neuen Verbindungsparametern durchgeführt, wobei die übergeordnete Datenkommunikation fortgesetzt wird.

Es kann vorzugsweise vorgesehen sein, die Sicherung der Datenkommunikation erst einzuleiten, wenn ein Zugriff auf Funktionen des Fahrzeugs erfolgt. Insbesondere kann beim Zugriffs eines Benutzers auf einen Türgriff eines Fahrzeugs der Aufbau einer gesicherten Datenkommunikation und ein Austausch geänderter Verbindungsparameter getriggert werden.

Der Benutzer und Träger eines ID-Gebers greift auf einen Türgriff eines Fahrzeugs zu. Zu diesem Zeitpunkt kann bereits eine grundsätzliche Verbindung in Gestalt eines Bluetooth-Netzwerks zwischen ID-Geber und Steuereinrichtung des Fahrzeuges bestehen. Der Zugriff auf den Türgriff wird von einem Sensor, insbesondere einem kapazitiven Sensor erfasst. Daraufhin löst die fahrzeugseitige Steuereinrichtung den Aufbau einer gesicherten Datenkommunikation aus. Der ID-Geber und die Steuereinrichtung bauen, sofern noch nicht erfolgt, eine Datenverbindung auf. Dann wird eine softwareseitige Verschlüsselung etabliert und bei bestehender verschlüsselter Verbindung werden die neuen Verbindungsparameter ausgetauscht. Dann wird die der Datenkommunikation unterliegende Kommunikationsverbindung gemäß diesen neuen Verbindungsparametern umgestellt. Danach wird die Kommunikationsverbindung gemäß den neuen Verbindungsparametern durchgeführt, wobei die übergeordnete, softwareseitig verschlüsselte Datenkommunikation fortgesetzt wird.

Dieses Vorgehen hat den Vorteil, dass die energieaufwendige verschlüsselte Datenverbindung nur bei Bedarf aktiviert wird und damit der Energiebedarf des ID-Gebers reduziert wird.

Es kann in diesem Zusammenhang auch eine weitere Plausibilitätskontrolle der Beziehung zwischen ID-Geber und Steuereinrichtung erfolgen. Insbesondere können Abstandsprüfungen durchgeführt werden, wobei die Signale zwischen Steuereinrichtung und ID-Geber hinsichtlich ihrer Laufzeit oder Signalstärke einem Plausibilitätstest unterzogen werden. Nur dann, wenn der Abstand zwischen ID-Geber und Steuereinrichtung plausibel ist (z.B. <2m), kann die verschlüsselte Datenkommunikation erfolgreich eine Entsperrung des Fahrzeugs bewirken.

Die Erfindung wird nun anhand der beiliegenden Zeichnung näher erläutert.

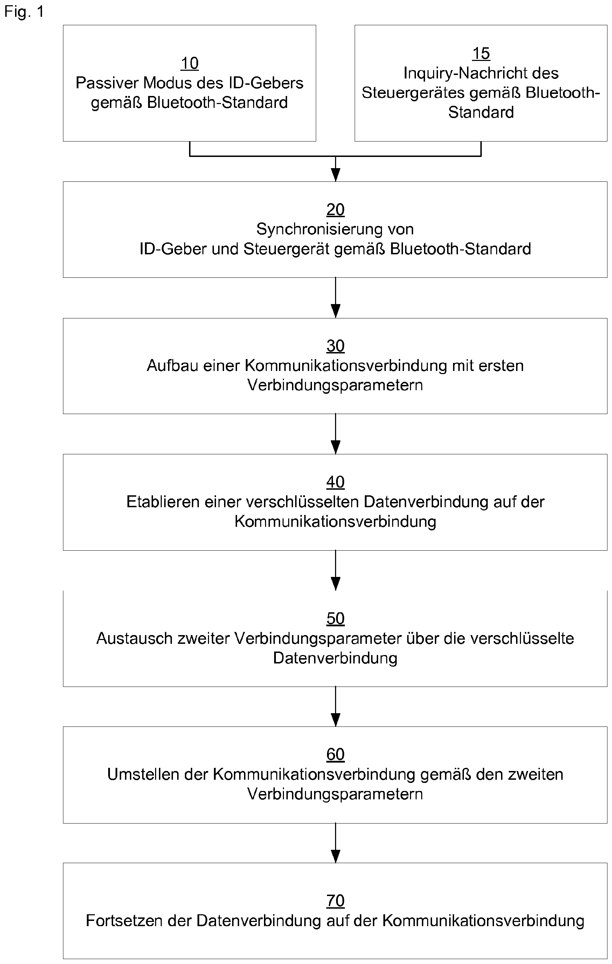

Figur 1 zeigt den Ablauf des erfindungsgemäßen Verfahrens;
Figur 2 visualisiert die Komponenten und den Ablauf des erfindungsgemäßen Verfahrens;
Im Schritt 10 befindet sich ein ID-Geber eines passiven Zugangssystems für ein Kraftfahrzeug in einer Kommunikationsbereitschaft gemäß dem Bluetooth-Standard. Der ID-Geber ist dabei im passiven Modus gemäß diesem Bluetooth-Standard ansprechbar. Der ID-Geber näher sich einem Fahrzeug mit zugehöriger Steuereinrichtung, welches das passive Zugangssystem fahrzeugseitig steuert und Funktionen im Fahrzeug freigeben kann. Die fahrzeugseitige Steuereinrichtung sendet bei Schritt 15 gemäß dem Bluetooth-Standard Inquiry-Nachrichten aus. Gelangt der ID-Geber in den Sendebereich der Steuereinrichtung und empfängt die Inquiry-Nachrichten, wird gemäß dem Bluetooth-Standard eine Verbindung zwischen ID-Geber und Steuereinrichtung des Fahrzeuges etabliert. Dazu wird in Schritt 20 in der bekannten Weise eine Synchronisierung zwischen ID-Geber und Steuereinrichtung (paging) vorgenommen. Ein solcher Vorgang ist im Stand der Technik und insbesondere der Bluetooth-Spezifikation hinreichend beschrieben und führt zu einem Connected-Zustand zwischen ID-Geber und Steuereinrichtung. Es kann grundsätzlich vorgesehen sein, dass ID-Geber und Steuereinrichtung bei einer ersten Verbindung noch ein sogenanntes Pairing durchlaufen müssen, dies ist jedoch nicht wesentlich für die Erfindung.

Nachdem in Schritt 20 die Synchronisierung zwischen ID-Geber und Steuereinrichtung stattgefunden hat, wird in Schritt 30 der Aufbau einer Kommunikationsverbindung durchgeführt. Anschließend wird auf der Kommunikationsverbindung aufsetzend eine Datenverbindung mit Verschlüsselung etabliert, was bei Schritt 40 geschieht. Dies kann insbesondere durch einen Programmablauf erfolgen, der auf dem ID-Geber und der Steuereinrichtung ausgeführt wird. Wird als ID-Geber ein Smartphone verwendet, kann eine Applikation die softwaregestützte Verschlüsselung zwischen den Daten dieser Applikation und der Steuereinrichtung vornehmen. Gemäß diesem Ausführungsbeispiel ist unter verschlüsselter Datenverbindung entsprechend eine softwaregesteuerte Verschlüsselung zu verstehen.

In Schritt 50 werden neue Verbindungsparameter generiert und ausgetauscht. Die Generierung von neuen Verbindungsparametern kann grundsätzlich sowohl im ID-Geber als auch der Steuereinrichtung im Fahrzeug erfolgen. Vorzugsweise erfolgt sie jedoch aufgrund der geringeren Manipulationsrisiken in der Steuereinrichtung des Fahrzeuges. Der neu generierte Verbindungsparameter, beispielsweise ein Startparameter für eine Erzeugung einer Folge von Pseudozufallszahlen, die eine Serie von Sprungfrequenzen bestimmen, wird entsprechend in beiden Geräten nach dem Austauschen vorliegen. Dann wird der über diese verschlüsselte Verbindung ausgetauschte Verbindungsparameter bei Schritt 60 genutzt, um die der verschlüsselten Datenverbindung unterliegende Kommunikationsverbindung gemäß dem zweiten Verbindungsparameter neu zu konfigurieren. Es wird also gemäß einem in der verschlüsselten Datenverbindung ausgetauschten Verbindungsparameter oder Parametersatz die Art und der Ablauf des Frequenzspreizungsverfahrens neu konfiguriert. Dies erhöht die Sicherheit einer Kommunikationsverbindung gegenüber dem herkömmlichen Verfahren, da die tatsächliche physikalische Datenübertragung mit Kanalwechseln oder Kanalnutzungsdauern gemäß einem Parameter einer verschlüsselten Verbindung neu konfiguriert wird.

Bei Schritt 70 wird auf Basis der umgestellten und neu konfigurierten unterliegenden Kommunikationsverbindung die übergeordnete verschlüsselte Datenverbindung fortgesetzt.

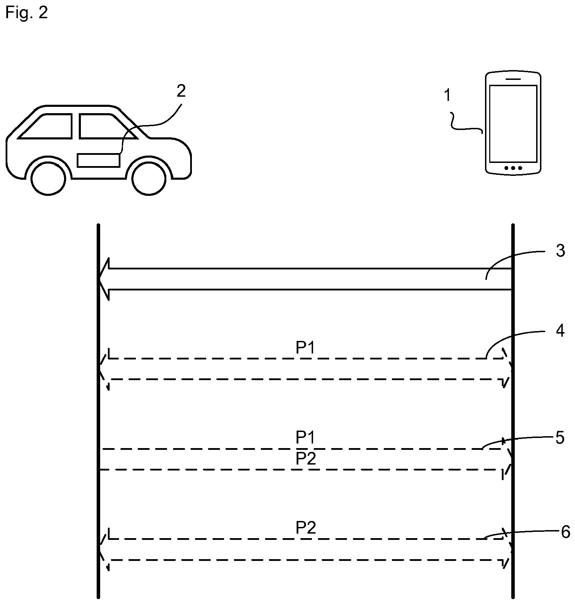

In Figur 2 sind die Komponenten und der Ablauf des Verfahrens in einem Schaubild visualisiert.

Der ID-Geber 1 ist in diesem Beispiel in einem Smartphone mit einer darauf ablaufenden Applikation gebildet. Eine Steuereinrichtung 2 in einem Fahrzeug stellt eine drahtlose Schnittstelle zu Kommunikation mit dem ID-Geber 1 zur Verfügung.

Mit einer drahtlosen Kommunikationsanfrage 3 gemäß einem in der Steuereinrichtung 2 und dem ID-Geber 1 etablierten Protokoll wird eine Kopplung zwischen ID-Geber und Steuereinrichtung 2 gestartet. Es wird gemäß einem drahtlosen Kommunikationsstandard (z.B. Bluetooth) eine Verbindung 4 unter Verwendung eines Frequenzspreizverfahrens aufgebaut, wobei Verbindungsparameter P1 des Frequenzspreizverfahrens die Verbindung bestimmen.

In einer Datenkommunikation 5, welche gemäß der etablierten Verbindung mit den Verbindungsparametern P1 abgewickelt wird, werden die Parameter P2 von der Steuereinrichtung 2 an den ID-Geber 1 übermittelt. Anschließend wird die Verbindung 6 zwischen der Steuereinrichtung 2 und dem ID-Geber 1 mit Verbindungsparametern P2 des Frequenzspreizverfahrens neu etabliert.

Da die Verbindungsparameter P2 innerhalb der Verbindung 5 übermittelt wurden, ist es für Außenstehende nicht möglich, die neuen Verbindungsparameter P2 nachzuvollziehen.

## Patentansprüche

1. Verfahren zum gesicherten Übertragen von Daten zwischen einem mobilen ID-Geber und einer Steuereinrichtung eines Kraftfahrzeugs,
mit den Schritten:
Aufbau einer drahtlosen Kommunikationsverbindung zwischen dem ID-Geber und der Steuereinrichtung, wobei eine Verbindung unter Verwendung eines Frequenzspreizungsverfahrens mit ersten Verbindungsparametern etabliert wird,
Herstellen einer verschlüsselten Datenkommunikation über die Kommunikationsverbindung,
Generieren von zweiten Verbindungsparametern in dem mobilen ID-Geber oder der Steuereinrichtung und Übermitteln der zweiten Verbindungsparameter über die verschlüsselte Datenkommunikation der drahtlosen Kommunikationsverbindung,
Umstellen der Kommunikationsverbindung auf eine Nutzung der zweiten Verbindungsparameter des Frequenzspreizungsverfahrens in dem ID-Geber und der Steuereinrichtung und Fortsetzen der Datenkommunikation über die umgestellte Kommunikationsverbindung.

2. Verfahren nach Anspruch 1, wobei die Verbindung gemäß dem Bluetooth-Standard hergestellt wird.

3. Verfahren nach einem der vorangehenden Ansprüche, wobei die Verbindungsparameter eine Frequenzabfolge von Trägerfrequenzen enthalten.

4. Verfahren nach einem der vorangehenden Ansprüche, wobei die Verbindungsparameter eine Serie von Sendedauern enthalten.

5. Verfahren nach einem der Ansprüche 1 bis 2, wobei die Verbindungsparameter in dem ID-Geber und der Steuereinrichtung in eine identische Berechnungsvorschrift eingesetzt werden, um Frequenzabfolgen und/oder zugeordnete Sendedauern zu berechnen.

6. Verfahren nach einem der Ansprüche 1 bis 2, wobei die Schritte des Aufbaus einer verschlüsselten Datenkommunikation und des Austauschs geänderter Verbindungsparameter in Reaktion auf eine Betätigung einer Sensoreinrichtung am Fahrzeug erfolgen.

7. Verfahren nach Anspruch 6, wobei zur Erfassung einer Betätigung einer Sensoreinrichtung ein Türgriff eines Fahrzeugs überwacht wird.

## Claims

1. Method for the secure transmission of data between a mobile ID transmitter and a control device of a motor vehicle
comprising the steps:
establishing a wireless communication link between the ID transmitter and the control device, wherein a link is established using a frequency spreading method with first connection parameters,
Establishing encrypted data communication over the communication link,
Generating second connection parameters in the mobile ID transmitter or control device and transmitting the second connection parameters via the encrypted data communication of the wireless communication link,
Changing the communication link to use the second connection parameters of the frequency spreading method in the ID transmitter and the control device and continuing the data communication via the changed communication link.

2. Method according to claim 1, wherein the connection is established according to the Bluetooth standard.

3. Method according to one of the preceding claims, wherein the connection parameters comprise a frequency sequence of carrier frequencies.

4. Method according to one of the preceding claims, wherein the connection parameters comprise a series of transmission durations.

5. Method according to one of the claims 1 to 2, wherein the connection parameters in the ID transmitter and the control device are inserted into an identical calculation rule to calculate frequency sequences and/or associated transmission durations.

6. Method according to one of claims 1 to 2, wherein the steps of establishing encrypted data communication and exchanging changed connection parameters are carried out in response to an actuation of a sensor device on the vehicle.

7. Method according to claim 6, wherein a door handle of a vehicle is monitored to detect an actuation of a sensor device.

## Revendications

1. Procédé de transmission sécurisée de données entre un émetteur d'identification mobile et un système de commande d'un véhicule automobile,
avec les étapes suivantes :
édification d'une liaison de communication sans fil entre l'émetteur d'identification et le système de commande, sachant qu'une liaison est établie en utilisant un procédé d'étalement de fréquence avec les premiers paramètres de liaison,
établissement d'une communication de données codée par la liaison de communication,
génération de deuxièmes paramètres de liaison dans l'émetteur d'identification mobile ou le système de commande et transmission des deuxièmes paramètres de liaison par la communication de données codée de la liaison de communication sans fil,
transposition de la liaison de communication en une utilisation des deuxièmes paramètres de liaison du procédé d'étalement de fréquence dans l'émetteur d'identification et le système de commande et poursuite de la communication de données par la liaison de communication transposée.

2. Procédé selon la revendication 1, sachant que la liaison est établie selon la norme Bluetooth.

3. Procédé selon l'une quelconque des revendications précédentes, sachant que les paramètres de liaison contiennent une suite de fréquences de fréquences porteuses.

4. Procédé selon l'une quelconque des revendications précédentes, sachant que les paramètres de liaison contiennent une série de durées d'émission.

5. Procédé selon l'une quelconque des revendications 1 à 2, sachant que les paramètres de liaison sont introduits dans l'émetteur d'identification et le système de commande dans une prescription de calcul identique pour calculer les suites de fréquences et/ou les durées d'émission attribuées.

6. Procédé selon l'une quelconque des revendications 1 à 2, sachant que les étapes de l'édification d'une communication de données codée et de l'échange de paramètres de liaison modifiés ont lieu en réaction à un actionnement d'un système de détection sur le véhicule.

7. Procédé selon la revendication 6, sachant que pour saisir un actionnement d'un système de détection, une poignée d'un véhicule est contrôlée.
